# EUROPEAN PATENT APPLICATION

(11) **EP 1 055 687 A2**
(43) Date of publication of application: **29.11.2000**
(21) Application number: 00110864.6
(22) Date of filing: 23.05.2000
(51) Int. Cl.: C08F 220/12, C09D 133/06

(54) **Emulsion and process for producing the same**

(30) Priority: 24.05.1999 JP 14395699; 24.05.1999 JP 14394599
(71) Applicant: CLARIANT INTERNATIONAL LTD., 4132 Muttenz (CH)
(72) Inventor: Aiba, Kazuo, c/o Clariant Polymers K.K., Ogasa-gun, Shizuoka 437-1412 (JP); Yoshimura, Nobuyoshi, c/o Clariant Polymers K.K., Ogasa-gun, Shizuoka 437-1412 (JP)
(74) Representative: Hütter, Klaus, Dr.

(57) **Abstract**

An object of the present invention is to provide emulsions that can favorably be used for exterior paints and that can form fine films excellent in various physical properties such as weathering resistance, water resistance and alkali resistance. This object of the present invention can be attained by a process for producing an emulsion, comprising preparing a monomer composition that comprises as essential components a (meth)acrylic ester, a dialkyl (meth)acrylamide or styrene (the amount of the styrene being from 0.1 to 20% by weight of the (meth)acrylic ester), and a surfactant, and subjecting the monomer composition to emulsion polymerization to form an emulsion.

## Description

### BACKGROUND OF THE INVENTION

### Field of the Invention

The present invention relates to an emulsion that can be used as a component of an exterior paint, and to a process for producing the same.

### Background Art

In the building industry, the prefabrication technique is now adopted more frequently than ever. This is because buildings that are uniform in quality can be constructed in shorter periods of time through the application of this technique. For construction using the prefabrication technique, highly durable ceramic exterior building materials such as siding boards and roof tiles are used in large quantities. To give appearances fit for the purposes of such building materials, and to protect the building materials themselves, exterior paints are applied to their surfaces to cover them with films.

The films of exterior paints should not deteriorate even when constantly exposed to various environments, such as aggressive environments in the cold season in which the films are repeatedly frozen and melted. The films are therefore required to be excellent in various physical properties such as weathering resistance, water resistance and durability. In particular, those films of exterior paints with which highly durable ceramic exterior building materials are covered should be more excellent in the above-described physical properties.

Exterior paints are classified into aqueous paints and solvent-type paints. The aqueous paints, especially paints of polymer emulsion type, are advantageous over the solvent-type paints in safety at the time of operation.

However, the aqueous paints, especially paints of polymer emulsion type, still have room for improvement in their physical properties.

To improve the physical properties of the aqueous paints, it has conventionally been made such a proposal that the size of emulsion particles is made extremely small. The aim of this proposal is to provide, by obtaining the size of emulsion particles extremely small to increase the capillary force that contributes to film formation, films that are finer than those formed by the use of emulsion particles having large particle diameters.

Essentially required for the production of such an emulsion is a technique capable of stably making emulsion particles extremely small. Microgel emulsions are known as emulsions whose emulsion particles are extremely small. For the production of microgel emulsions, however, there are many limitations on monomers, surfactants, polymerization process, etc. to be used. A method using a large quantity of hydrophilic components such as surfactants or protective colloids has conventionally been known as the technique for making the size of emulsion particles small. However, an emulsion produced by this method contains a large quantity of the hydrophilic components, so that a dried film of this emulsion shows decreased water resistance. Moreover, it is occasionally observed that photooxidation catalytic reaction is caused by water contained in the film to decrease the weathering resistance of the film.

### SUMMARY OF THE INVENTION

We found that it is possible to stably obtain an emulsion capable of forming a fine film excellent in various physical properties such as weathering resistance, water resistance and alkali resistance, by firstly preparing a monomer composition comprising as essential components a (meth)acrylic ester, a dialkyl (meth)acrylamide or styrene, and a surfactant, and then subjecting this monomer composition to emulsion polymerization. The present invention was accomplished on the basis of this finding.

An object of the present invention is therefore to provide a process for stably producing an emulsion that can favorably be used as a component of an exterior paint and that can form a fine film excellent in various physical properties such as weathering resistance, water resistance and alkali resistance.

A process for producing an emulsion according to the present invention comprises preparing a monomer composition comprising as essential components (a) a (meth)acrylic ester, (b) a dialkyl (meth)acrylamide or styrene wherein the amount of the styrene is from 0.1 to 20% by weight of the (meth)acrylic ester, and (c) a surfactant, and subjecting the monomer composition to emulsion polymerization to form an emulsion.

An emulsion according to the present invention is one produced by the above-described production process.

### DETAILED DESCRIPTION OF THE INVENTION

### Process for Producing Emulsion

A process for producing an emulsion according to the present invention comprises preparing a monomer composition comprising specific monomers, and subjecting this monomer composition to emulsion polymerization to form an emulsion. In this invention, the monomer composition comprises as essential components a (meth)acrylic ester, a dialkyl (meth)acrylamide or styrene, and a surfactant. Optionally, this monomer composition can further comprise a vinyl ester of a branched carboxylic acid and/or other components.

### Monomer Composition

### (a) (Meth)acrylic Ester

Any purposive (meth)acrylic ester properly selected can be used for the process of the present invention. Examples of (meth)acrylic esters that can favorably be used in the present invention include alkyl (meth)acrylates having linear or branched alkyl groups containing 1 to 12 carbon atoms, and cyclohexyl (meth)acrylate having cyclohexyl group.

Specific examples of (meth)acrylic esters include methyl acrylate, ethyl acrylate, propyl acrylate, butyl acrylate, 2-ethylhexyl acrylate, hydroxyethyl acrylate, hydroxypropyl acrylate, hydroxybutyl acrylate, cyclohexyl acrylate, methyl methacrylate, ethyl methacrylate, propyl methacrylate, butyl methacrylate, 2-ethylhexyl methacrylate, hydroxyethyl methacrylate, hydroxypropyl methacrylate, hydroxybutyl methacrylate, cyclohexyl methacrylate, methylcyclohexyl methacrylate, and methylcyclohexyl acrylate. These (meth)acrylic esters may be used either singly or in combination of two or more members.

Of these, cyclohexyl (meth)acrylate and alkyl (meth)acrylates, particularly methyl methacrylate, butyl acrylate, cyclohexyl methacrylate and cyclohexyl acrylate are preferred from the viewpoints of the weathering resistance and water resistance of the resulting emulsion, and polymerization stability.

In the present invention, the content of the (meth)acrylic ester in the whole monomer composition is preferably from 50 to 99.9% by weight, more preferably from 70 to 99.5% by weight. As long as the (meth)acrylic ester content of the monomer composition is in the above-described range, the emulsion produced forms a film that is excellent in water resistance and weathering resistance.

In the case where cyclohexyl (meth)acrylate is used in the present invention as the (meth)acrylic ester, it is preferable to use the content of the cyclohexyl (meth)acrylate in the whole monomer composition 90% by weight or less. When the cyclohexyl (meth)acrylate content of the monomer composition is in the above-described range, it is possible to increase the contents of the other components such as styrene in the whole monomer composition. As a result, sufficiently high polymerization stability can be attained.

### (b) Dialkyl (Meth)acrylamide

Any purposive dialkyl (meth)acrylamide properly selected can be used in the process according to the present invention. Preferable examples of dialkyl (meth)acrylamides include di(C1-4 alkyl) (meth)acrylamides; and diethyl (meth)acrylamide, dimethyl (meth)acrylamide, dibutyl (meth)acrylamide, dipropyl acrylamide, and the like are more preferred. In the present invention, these dialkyl (meth)acrylamides may be used either singly or in combination of two or more members.

Of the above-enumerated dialkyl (meth)acrylamides, those ones having alkyl groups containing 1 or 2 carbon atoms, such as diethyl (meth)acrylamide and dimethyl (meth)acrylamide, are particularly preferred. Such dialkyl (meth)acrylamides have hydrophilicity and hydrophobicity that are well balanced. Moreover, they act just like protective colloids. Therefore, by the use of such dialkyl (meth)acrylamides, it is possible to obtain improved emulsifiability without decreasing the water resistance of the resulting emulsion particles.

In the present invention, the dialkyl (meth)acrylamide is (co)polymerized during the step of emulsion polymerization to stabilize the polymerization system, so that it is useful for the stable production of an emulsion. In general, a (co)polymer of the dialkyl (meth)acrylamide is hydrophilic, and exists in the vicinity of the surfaces of the emulsion particles to form hydrated layers. For this reason, it is considered that the (co)polymer of the dialkyl (meth)acrylamide acts just like protective colloids. Since the dialkyl (meth)acrylamide copolymerized with other monomers is oriented near the surfaces of the emulsion particles unlike ordinary protective colloids that are adsorbed by the surfaces of emulsion particles, it is considered that the (co)polymer of the dialkyl (meth)acrylamide can increase the emulsion stability without decreasing the water resistance of the emulsion particles. The emulsion particles are therefore excellent in both water resistance and mechanical stability. Further, since these emulsion particles are extremely small, they show good film-forming properties, and can form a film that is excellent in various physical properties. On the contrary, when a monoakyl (meth)acrylamide is used, a film of the resulting emulsion is to have increased hydrophilicity, so that it generally shows deceased resistance to water and weather.

The content of the dialkyl (meth)acrylamide in the monomer composition is preferably from 0.5 to 10% by weight, more preferably from 0.5 to 5% by weight. As long as the dialkyl (meth)acrylamide content of the monomer composition is in the above-described range, sufficiently high polymerization stability can be attained. Moreover, a film of the emulsion produced has decreased hydrophilicity, so that it shows improved resistance to water and weather.

### (b) Styrene

In the process according to the present invention, the monomer composition can contain styrene instead of the dialkyl (meth)acrylamide. Styrene can moderate, due to its chain transfer activity, the reactivity of the (meth)acrylic ester that varies depending upon its type. Therefore, if styrene is used, it is prevented that one of the monomers in the polymerization system reacts rapidly, and the polymerization system is thus maintained stable during the step of emulsion polymerization. Further, the emulsion produced can form a film having high resistance to weather, not being yellowed even when exposed to light for a long period of time.

The amount of styrene contained in the monomer composition is from 0.1 to 20% by weight, preferably from 0.5 to 10% by weight, more preferably from 0.5 to 7% by weight of the (meth)acrylic ester. As long as the amount of styrene is in the above-described range, the polymerization reaction stably proceeds. Moreover, the emulsion produced can form a film having high resistance to weather, not being yellowed even when exposed to light for a long period of time.

### (c) Surfactant

Any purposive surfactant properly selected can be used in the process for producing an emulsion according to the present invention. Preferable examples of surfactants include anionic, nonionic or cationic surfactants that are usually used for emulsion polymerization. These surfactants may be used either singly or in combination of two or more members.

The combination use of an anionic surfactant and a nonionic surfactant is preferred when the stability of the polymerization system during the emulsion polymerization process, the stability of the emulsion produced, and the stability of a paint or the like for which the emulsion is used are taken into consideration.

Examples of anionic surfactants that can favorably be used in the present invention include alkylbenzene sodium sulfonates, sodium alkyl sulfonates, and polyoxyethylene sodium alkyl ether sulfonates.

Preferable examples of nonionic surfactants include those of polyoxyethylene alkyl ether type, polyoxyethylene type or polyoxypropylene glycol type.

Any purposive cationic surfactant properly selected from known ones can be used.

In the present invention, it is possible to use, along with the above- described surfactants, polymerizable surfactants having radically polymerizable unsaturated bond. Any polymerizable surfactant having radically polymerizable unsaturated bond, properly selected from known ones can be used in the present invention. Examples of such polymerizable surfactants include anionic surfactants, nonionic reactive surfactants, and cationic reactive surfactants containing quaternary ammonium salts or tertiary amine salts and polymerizable groups. The polymerizable surfactants specifically include the following compounds 1) to 15).

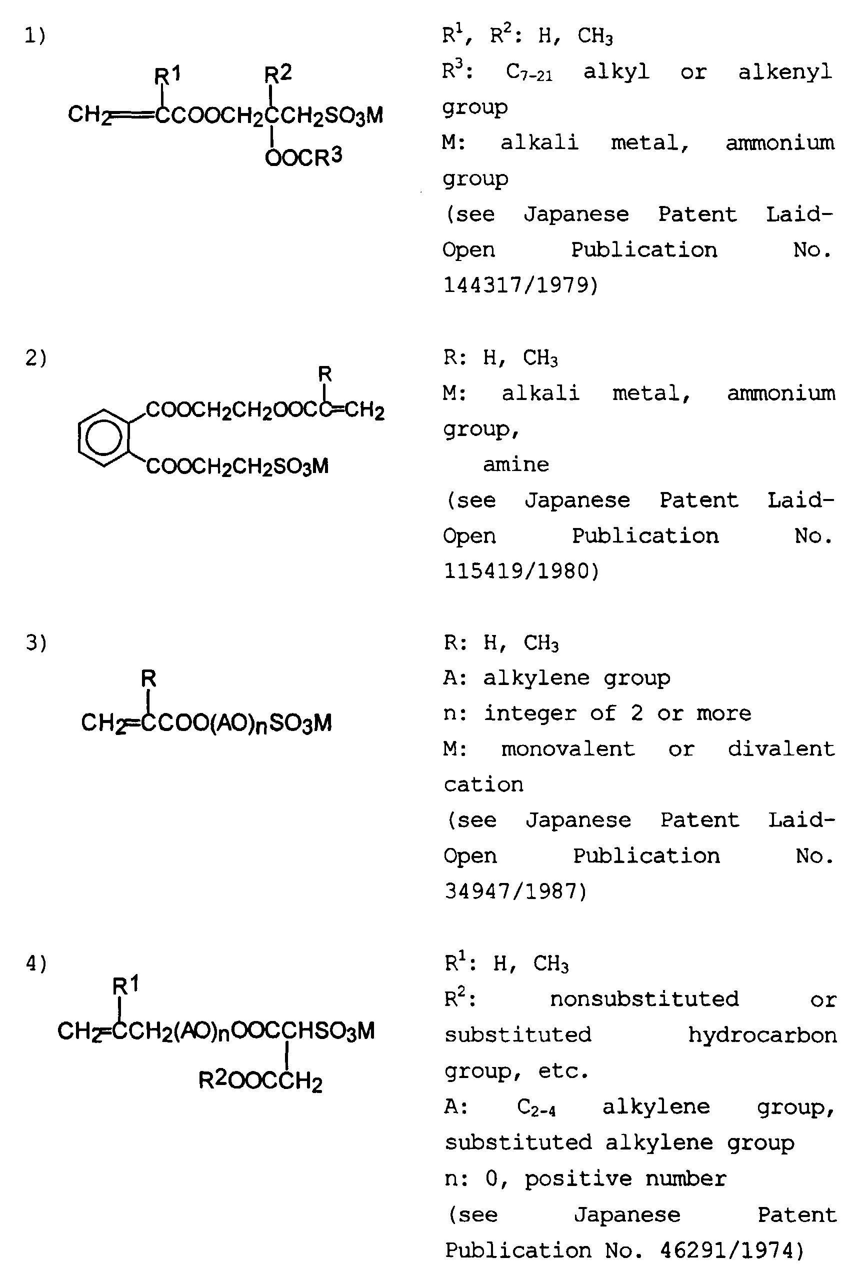

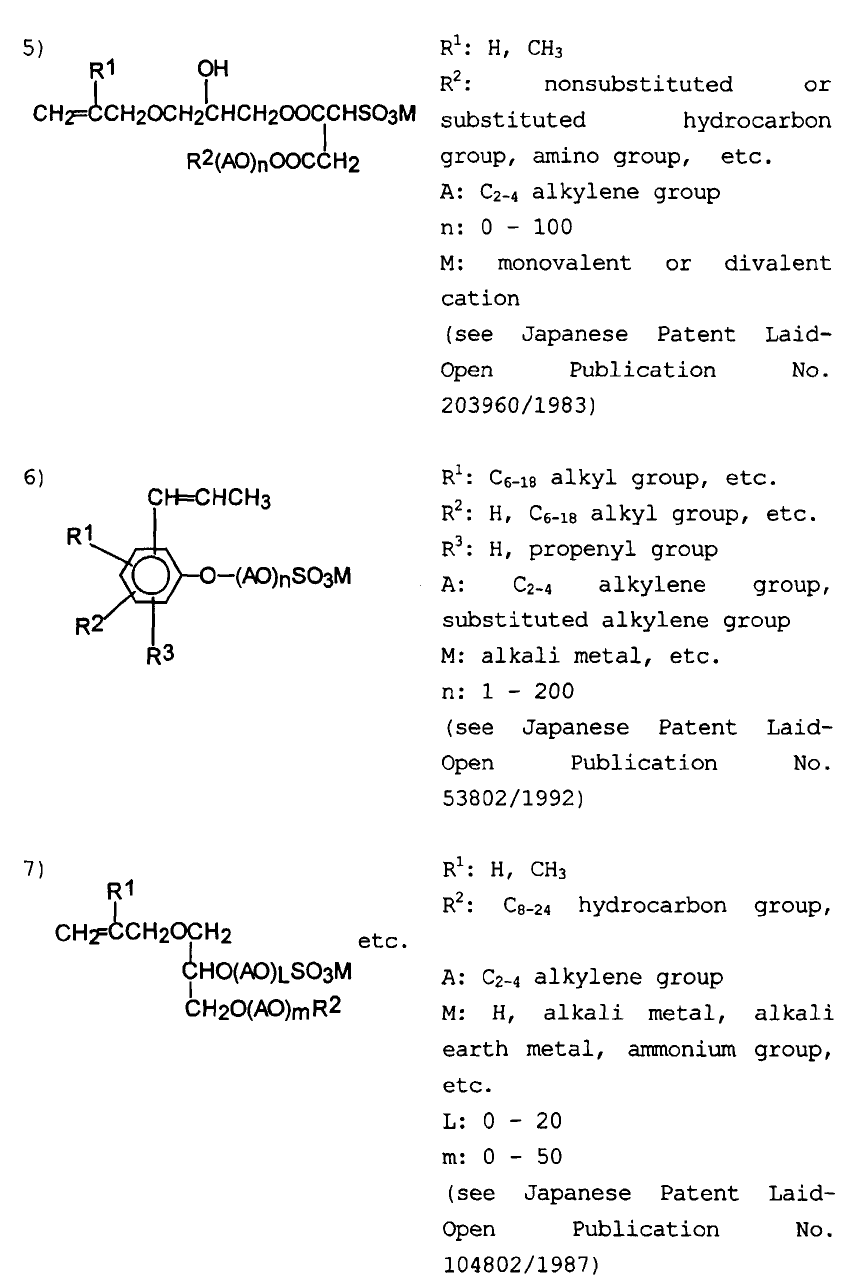

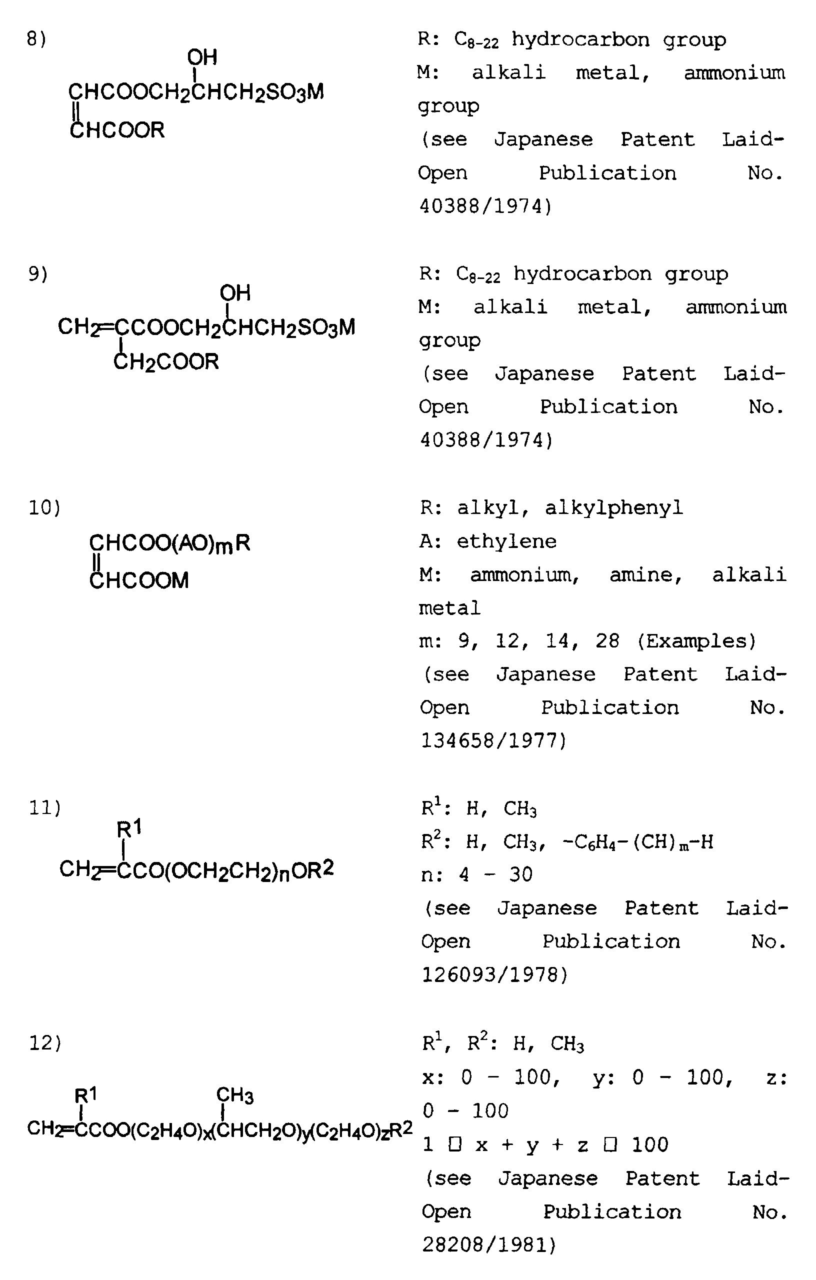

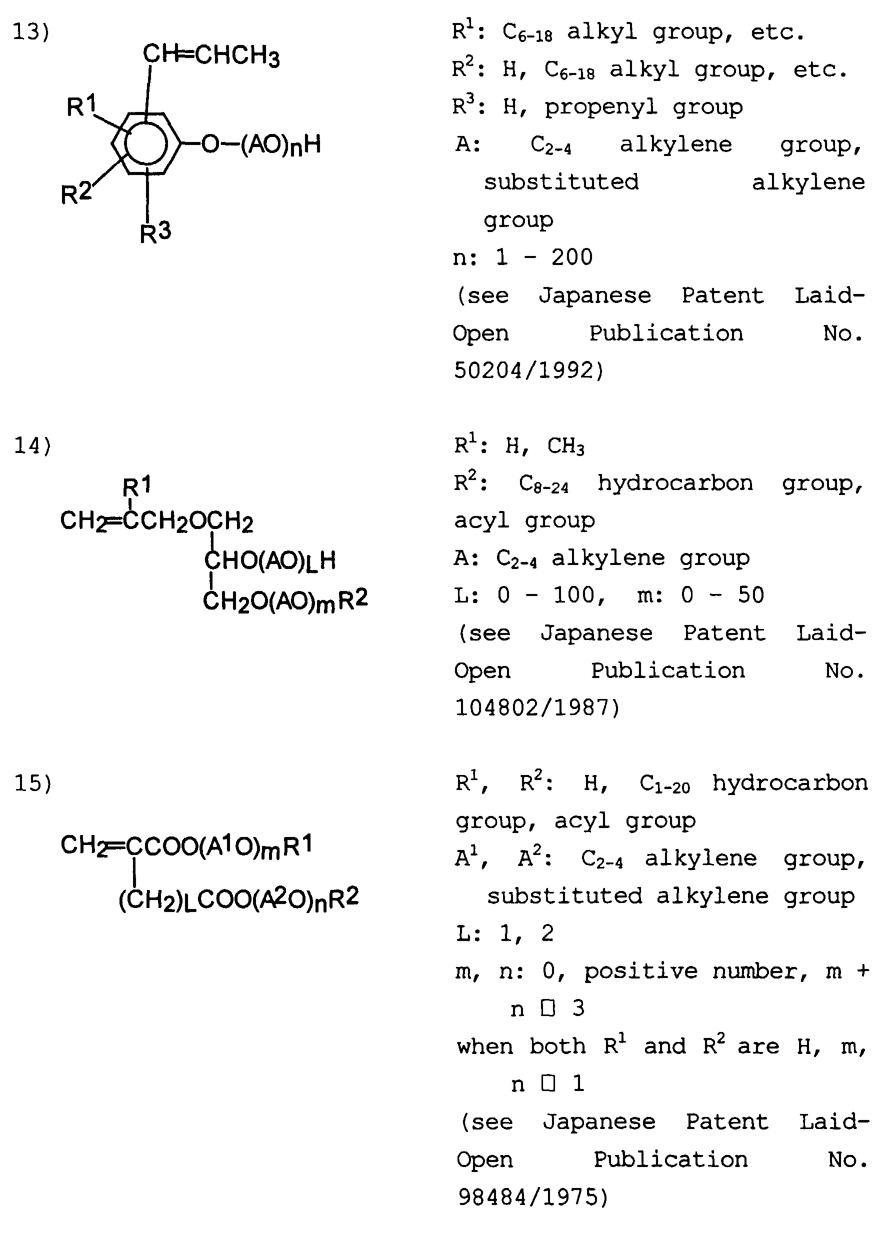

The polymerizable surfactant is polymerized with the (meth)acrylic ester and the styrene or the dialkyl (meth)acrylamide during the step of emulsion polymerization, and bonded to them by covalent bond to from a polymer chain, so that it never exists singly in the free state. In general, therefore, the polymerizable surfactant does not form water-absorptive pockets within a film that is formed by the use of the emulsion produced; such a film hardly attracts water into it. The use of the polymerizable surfactant is thus favorable to impart increased water resistance, weathering resistance, etc. to the film of the emulsion.

In the present invention, the content of the surfactant in the final emulsion is preferably from 0.1 to 10% by weight, more preferably from 0.1 to 5% by weight. As long as the content of the surfactant in the emulsion is in the above-described range, the emulsion polymerization stably proceeds. In addition, the emulsion produced forms a film whose water-absorptivity is low: this film is hardly whitened, and shows high resistance to weather.

### (d) Vinyl Ester of Branched Carboxylic Acid

In the process according to the present invention, when the monomer composition comprises the dialkyl (meth)acrylamide, the monomer composition can further comprise a vinyl ester of a branched carboxylic acid. Therefore, the monomer composition may be one comprising the (meth)acrylic ester, the dialkyl (meth)acrylamide, the surfactant and a vinyl ester of a branched carboxylic acid.

When a vinyl ester of a branched carboxylic acid is used in the monomer composition, the branched alkyl group shows, in the emulsion particles produced, greater steric hindrance and high hydrophobicity, so that weak bonds in the main chain are to be protected. As a result, the emulsion particles have improved resistance to water and weather, and also show high resistance to frost damage.

The vinyl ester of a branched carboxylic acid that is favorably used in the present invention includes compounds represented by the following structural formula: 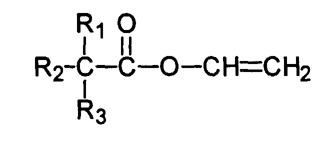 wherein R₁, R₂ and R₃ independently represent an alkyl group, provided that at least one of these alkyl groups is methyl group and that the total number of carbon atoms contained in the alkyl groups is from 7 to 9.

Since the total number of carbon atoms contained in R₁, R₂ and R₃ in the above formula is from 7 to 9, the vinyl ester of a branched carboxylic acid is to have a branched alkyl group that shows great steric hindrance and high hydrophobicity. This alkyl group can protect weak bonds present in the main chain, so that the resulting emulsion is to have improved resistance to weather and frost damage.

The vinyl ester of a branched carboxylic acid for use in the present invention may be either properly synthesized one or commercially available one. Examples of commercially available vinyl esters of branched carboxylic acids include Veova 9, Veova 10 and Veova 11 (all available from Shell Japan Ltd., Japan). These vinyl esters of branched carboxylic acids may be used either singly or in combination of two or more members.

The content of the vinyl ester of a branched carboxylic acid in the whole monomer composition is preferably 20% by weight or more, more preferably from 20 to 80% by weight. As long as the content of the vinyl ester of a branched carboxylic acid in the monomer composition is in the above-described range, the emulsion polymerization proceeds stably, and the emulsion produced forms a film that is excellent in various physical properties such as weathering resistance, water resistance, and alkali resistance.

It is noted that the addition of the vinyl ester of a branched carboxylic acid to the monomer composition that contains styrene can entail the following consequence: the polymerization reaction does not smoothly proceed, and the reaction system thus becomes unstable; as a result, it becomes difficult to obtain a desired emulsion.

### (e) Additional Components

The monomer composition for use in the present invention can further comprise additional components as needed.

Examples of additional components that can be used in the present invention include copolymerizable monomers, crosslinkable monomers, alkoxysilanes, and known additives such as ultraviolet absorbers, hindered amine light stabilizers, polymerization initiators, chain transfer agents, aqueous media, pH adjustors, thickeners, anti-freezing agents, anti-foaming agents and preservatives. These additional components may be used either singly or in combination of two or more members.

### Copolymerizable Monomers

Examples of copolymerizable monomers that can be used in the present invention include methylstyrene, vinyl phosphate, acrylonitrile, acrylamide, N-methylolacrylamide, glycidyl methacrylate, alkoxyethyl acrylate, and ethylenically unsaturated carboxylic acids such as acrylic acid, methacrylic acid, maleic acid and crotonic acid. These copolymerizable monomers may be used either singly or in combination of two or more members.

The amount of the copolymerizable monomer to be added to the monomer composition varies depending upon its type. In general, however, it is preferably 30% by weight or less of the whole emulsion.

### Crosslinkable Monomers

Examples of crosslinkable monomers that can be used in the present invention include monomers having functional groups, such as those monomers having two or more polymerizable unsaturated groups.

Examples of monomers having two or more polymerizable unsaturated groups include divinyl compounds, di(meth)acrylate compounds, tri(meth)acrylate compounds, tetra(meth)acrylate compounds, diallyl compounds, triallyl compounds and tetraallyl compounds. Specific examples of these monomers include divinylbenzene, divinyl adipate, ethylene glycol di(meth)acrylate, diethylene glycol di(meth)acrylate, triethylene glycol di(meth)acrylate, polyethylene glycol di(meth)acrylate, polypropylene glycol di(meth)acrylate, neopentylglycol di(meth)acrylate, 1,3-butylene glycol di(meth)acrylate, 1,3-butyl di(meth)acrylate, trimethylolethane tri(meth)acrylate, trimethylolpropane tri(meth)acrylate, dipentaerythritol tri(meth)acrylate, diallyl phthalate, triallyl dicyanurate, and tetraallyl oxyethane. These crosslinkable monomers may be used either singly or in combination of two or more members.

### Alkoxysilanes

Alkoxysilanes are compounds represented by the following general formula (1) or (2): 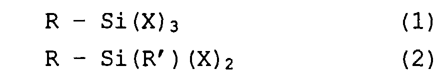 wherein R represents an organic group having such a group as vinyl, epoxy, mercapto, amino or isocyanate, R' represents a lower alkyl group having 1 to 3 carbon atoms, and X represents methoxyl or ethoxyl group.

Specific examples of such alkoxysilanes include vinylalkoxysilanes such as vinyltrimethoxysilane, vinylmethyldimethoxysilane, vinyldimethyl- methoxysilane, vinyltriethoxysilane, vinyl(2-methoxyethoxy)silane and vinyl- triacetoxysilane; γ-glycidoxypropyltrimethoxysilane, γ-glycidoxypropylmethyl-dimethoxysilane; epoxyalkoxysilanes such as 3,4-epoxycyclohexylethyl-trimethoxysilane and 3,4-epoxycyclohexylethyldimethoxysilane; mercaptoalkoxysilanes such as γ-mercaptopropyltrimethoxysilane; and γ-methacryloxypropyltrimethoxysilane and γ-methacryloxypropyltriethoxysilane. These alkoxysilanes may be used either singly or in combination of two or more members.

In the present invention, the amount of the alkoxysilane to be added is preferably from 0.01 to 10% by weight of the previously mentioned (meth)acrylic ester. As long as the alkoxysilane is added in an amount in the above-described range, it never forms siloxane bond whose strength is great. Therefore, the polymer chain does not lose its degree of freedom, and the emulsion particles are thus sufficiently fused to form a film that is not brittle.

### Ultraviolet Absorbers

Any purposive ultraviolet absorber properly selected can be used in the present invention. Examples of ultraviolet absorbers that can favorably be used in the present invention include benzophenone derivatives, and benzotriazole derivatives. These compounds are described, for example, in the specification of USP 3,162,676, and in Japanese Patent Laid-Open Publications No. 189204/1983, No. 132039/1983, No. 179245/1983, No. 4452/1984, No. 142778/1990 and No. 126536/1995.

Specific examples of ultraviolet absorbers include 2-hydroxybenzo-phenone derivatives, 2-hydroxybenzotriazole derivatives and 2-(2'-hydroxy-phenyl)benzotriazole derivatives. These ultraviolet absorbers may be used either singly or in combination of two or more members.

Of these, those ultraviolet absorbers having in their structures radically polymerizable unsaturated bond are preferred. This is because such ultraviolet absorbers can enter into emulsion particles, so that their ultraviolet-absorbing effect lasts for a long period of time.

The amount of the ultraviolet absorber to be added is preferably from 0.01 to 10% by weight of the previously mentioned (meth)acrylic ester. As long as the ultraviolet absorber is added in an amount of the above-described range, the copolymerization reaction is never inhibited. Therefore, no precipitate is produced in the polymer, and the emulsion produced shows good film-forming properties, and forms a film that is excellent in ultraviolet-absorbing effect.

### Hindered Amine Light Stabilizers

Examples of hindered amine light stabilizers that can be used in the present invention include piperidine compounds as described in Japanese Patent Laid-Open Publication No. 91257/1986.

Specific examples of such piperidine compounds include 4-bonzoyloxy-2,2,6,6-tetramethyl piperidine, and 1-(3,5-di-tert-butyl-4-hydroxyphenyl-propionyloxyethyl)-4-(3,5-di-tert-butyl-4-hydroxyphenylpropionyloxy)-4-benzoyloxy-2,2,6,6-tetramethyl piperidine. These piperidine compounds may be used either singly or in combination of two or more members.

Of these, those light stabilizers having in their structures radically polymerizable unsaturated bond are preferred. This is because such light stabilizers can enter into emulsion particles, so that their light stabilizing effect lasts for a long period of time.

The amount of the hindered amine photostabilizer to be added is preferably from 0.01 to 10% by weight of the previously mentioned (meth)acrylic ester. As long as the hindered amine photostabilizer is added in an amount of the above-described range, the emulsion produced shows good film-forming properties. Moreover, those hindered amine light stabilizers having polymerizable unsaturated bond never inhibits polymerization reaction. In addition, such light stabilizers prevent photooxidation catalytic reaction, so that it is preferable to use them to obtain desired physical properties.

### Polymerization Initiators

Examples of polymerization initiators that can be used in the present invention include persulfates such as potassium persulfate, sodium persulfate and ammonium persulfate, hydrogen peroxide, organic peroxides such as butyl peroxide, and redox polymerization initiators that are combinations of the above compounds and reducing agents. These polymerization initiators may be used either singly or in combination of two or more members.

### Chain Transfer Agents

Any chain transfer agent properly selected from known ones can be used in the present invention. Examples of chain transfer agents include alcohols such as methanol, ethanol, propanol and butanol, carboxylic acids having 2 to 8 carbon atoms such as acetone, methyl ethyl ketone, cyclohexane, acetophenone, acetaldehyde, propionaldehyde, n-butyl aldehyde, furfural and benzaldehyde, and mercaptans such as dodecyl mercaptan, lauryl mercaptan, normal mercaptan, 2-ethylhexyl thioglycolate, thioglycolic acid, octyl thioglycolate and thioglycerol. These chain transfer agents may be used either singly or in combination of two or more members.

### Aqueous Media

Any purposive aqueous medium properly selected can be used in the present invention. Examples of aqueous media include water, and alcoholic aqueous solutions.

Of these, water is preferred from viewpoints of handling and cost. Any water such as tap water or ion-exchanged water can be used in the present invention.

### Emulsion Polymerization

In the process according to the present invention, the aforementioned monomer composition is subjected to emulsion polymerization to produce an emulsion.

In the present invention, it is possible to conduct the polymerization through the application of any emulsion polymerization process, by using a known apparatus under properly selected conditions. For example, there can be employed a batch polymerization process in which the monomer composition is charged to a reactor, the reactor is heated up, and a polymerization initiator is properly added to the monomer composition to conduct emulsion polymerization; a monomer-dropping polymerization process in which water and a surfactant are charged to a reactor, the reactor is heated up, and the monomer composition is then added dropwise to the reactor; or an monomer emulsion dropping polymerization process in which the monomer composition is firstly emulsified with a surfactant and water, and then dropped. The emulsion polymerization may also be conducted through a multi-stage polymerization process in which emulsion particles of core/shell type are produced; a power-feeding polymerization process in which both internal and external compositions of emulsion particles are varied stepwise; or a seed polymerization process in which polymerization is conducted in the presence of seed particles.

### Emulsion

The emulsion particles of the emulsion produced by the production process of the present invention are extremely small.

The mean particle diameter of the emulsion particles is preferably 200 nm or less, more preferably 100 nm or less. Emulsion particles having a mean particle diameter of 200 nm or less can sufficiently provide capillary force, which contributes to the formation of a film, so that they can form a fine film.

If the use of the emulsion for exterior paints is taken into consideration, it is preferable that the glass transition temperature (Tg) of the polymer contained in the emulsion particles be from about 10 to 70°C, more preferably from 20 to 50°C from the viewpoints of tackiness at normal temperatures, staining properties and blocking tendency.

By using the emulsion according to the present invention, it is possible to form a fine film excellent in weathering resistance, water resistance, and the like. The emulsion of the present invention can thus be favorably used for, in particular, exterior paints that are applied to outside walls, roofing tiles, or the like.

### EXAMPLES

The present invention will now be explained more specifically by referring to the following Examples. However, the present invention is not limited to these examples.

### Example 1

Four parts by weight of a radically polymerizable anionic surfactant ("AQUALON HS-20" manufactured by Dai-Ichi Kogyo Seiyaku Co., Ltd., Japan) and 2 parts by weight of polyoxyethylene nonyl phenyl ether ("Emulgen 930", nonionic surfactant, manufactured by Kao Corporation, Japan, EO = 17) were charged as the surfactant to a reactor together with 150 parts by weight of water. The reactor was heated up until the temperature inside it reached 85°C. Subsequently, 10% by weight of a monomer composition prepared in accordance with the following formulation, and 1.1 parts by weight of a 3-wt% aqueous solution of potassium persulfate were added, and initial polymerization was conducted while maintaining the temperature inside the reactor at 85°C.

### 〈Monomer Composition〉

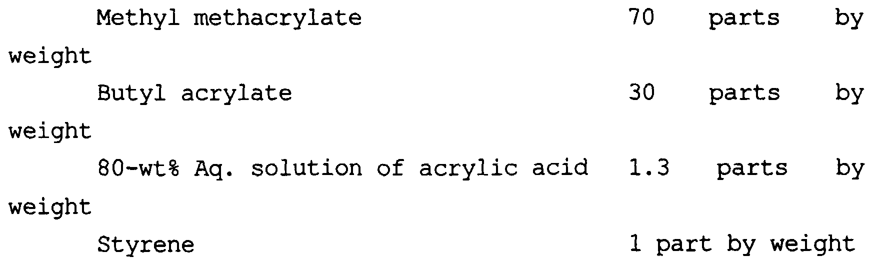

After 30 minutes, the remaining 90% by weight of the monomer composition and 4.4 parts by weight of a 3-wt% aqueous solution of potassium persulfate were added dropwise to the above mixture over 4 hours. After the addition was completed, the mixture was aged for 1 hour to complete the emulsion polymerization reaction, followed by cooling to room temperature. The pH of the resultant was then adjusted to the weak alkali side by the use of 1.6 parts by weight of 10% aqueous ammonia.

The emulsion obtained was homogeneous and milky white in color. The glass transition temperature (Tg) of the polymer calculated was 36.8°C.

### Examples 2 to 27 and Comparative Examples 1 to 5

The procedure of Example 1 was repeated except that the formulation of the monomer composition and the materials charged to the reactor in Example 1 were changed as shown in Tables 1 to 4, thereby respectively producing emulsions.

In Tables 1 to 4, "AQUALON RN-20" is a nonionic radically polymerizable surfactant manufactured by Dai-Ichi Kogyo Seiyaku Co., Ltd., Japan. Further, the unit of numerical values shown in Tables 1 to 4 is "part(s) by weight".

### Evaluation Tests

The emulsions of Examples and Comparative Examples obtained were subjected to the following evaluation tests. The results are shown in Tables 4 to 6.

In Tables 5 to 8, "Tg of Polymer" means the glass transition temperature (°C) of the polymer present inside the emulsion particles of the finely dispersed emulsion.

### a) Polymerization Stability

Each emulsion obtained was filtered through filter cloth of 156 × 100 mesh, and the amount (mg/100 g finely dispersed emulsion (EM)) of coarse particles deposited on the filter cloth was measured. To this measured value, the following criteria were applied to evaluate the polymerization stability:
- A:: less than 10,
- B:: 10 or more and less than 20,
- C:: 20 or more and less than 30, and
- D:: 30 or more.

### b) Mean Particle Diameter

The mean particle diameter of the emulsion particles of each emulsion obtained was measured by a laser analysis/scattering particle size distribution meter ("NICOMP Model 370" manufactured by Particle Sizing System Corp.).

### c) Weathering Resistance

### (Preparation of Coated Plate for Testing)

An acrylic emulsion sealer (diluted to 1/4) was applied to a slate with a brush, and then dried. To this, a black paint prepared in accordance with the following formulation was applied twice by means of spraying so that the total amount of the paint would be 50 g/m². Subsequently, the slate was dried at 80°C for 20 minutes, and then aged at room temperature for 24 hours. This slate was used as a coated plate for testing.

### 〈Black Paint〉

| | |
|---|---|
| Emulsion (40% by weight) | 100 parts |
| Film-forming aid ("BCA" manufactured by Daicel Chemical Industries, Ltd., Japan) | 5.0 parts |
| Black coloring paste ("Colanyl Black GR130" available from Clariant Japan K.K., Japan) | 0.5 parts |

### (Accelerated Weathering Test)

By the use of an accelerated weathering tester ("EYE SUPER UV TESTER SUV-W13" manufactured by Nippon Plastic Industry Co., Ltd., Japan), the coated plate for testing was exposed to light/dew (6/2 hour cycle) for 500 hours, and the percentage of gloss retention (%) was determined, and evaluated in accordance with the following criteria:
- A:: percentage of gloss retention > 80%,
- B:: 80% ≥ percentage of gloss retention > 60%,
- C:: 60% ≥ percentage of gloss retention > 40%,
and
- D:: percentage of gloss retention < 40%.

### d) Water Resistance

For this test, a coated plate for testing prepared in the same manner as in the above-described evaluation test for weathering resistance was used. The coated plate was immersed in hot water at 60°C for 24 hours, and then dried at room temperature for 24 hours. The condition of the film on the coated plate was visually observed, and evaluated in accordance with the following criteria:
- A:: No whitening can be observed,
- B:: Whitening is slightly observed,
- C:: Whitening is observed, and
- D:: Whitening is significantly observed.

The results of the above evaluation tests are shown in Tables 5 to 8.

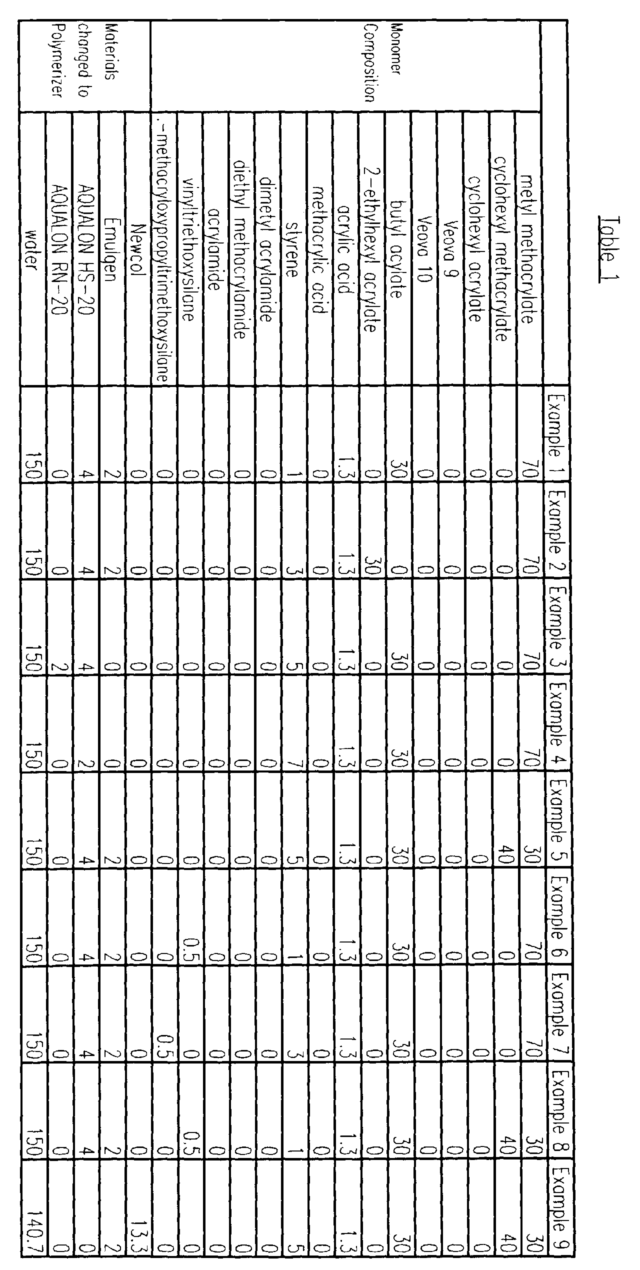

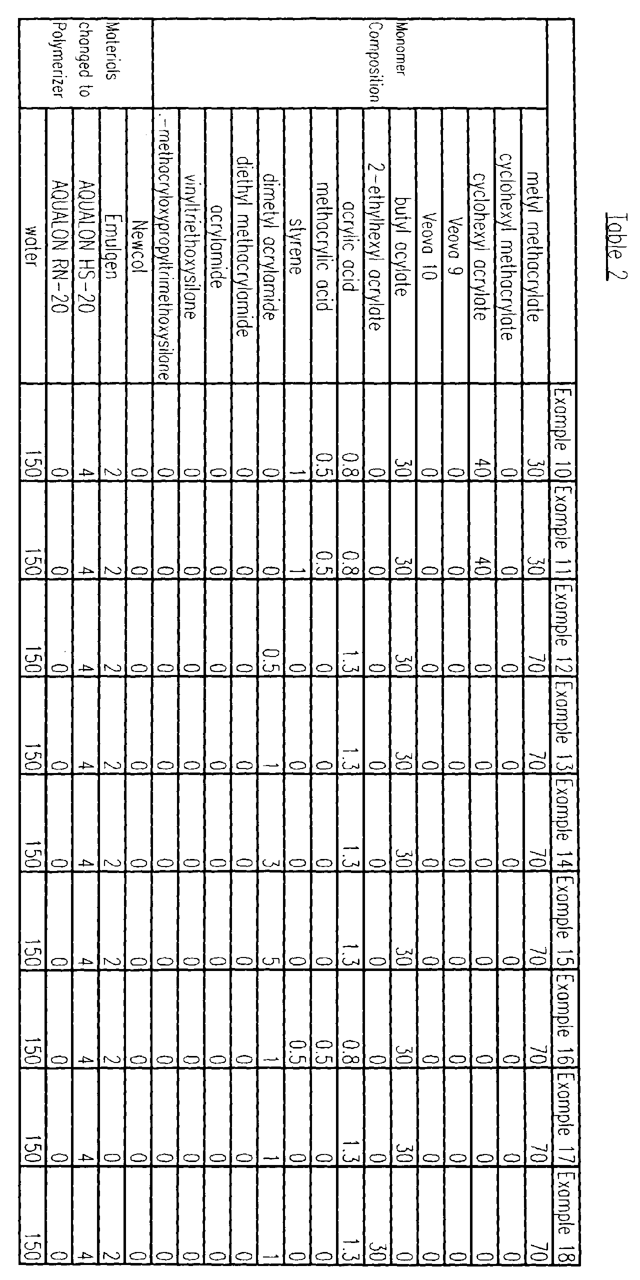

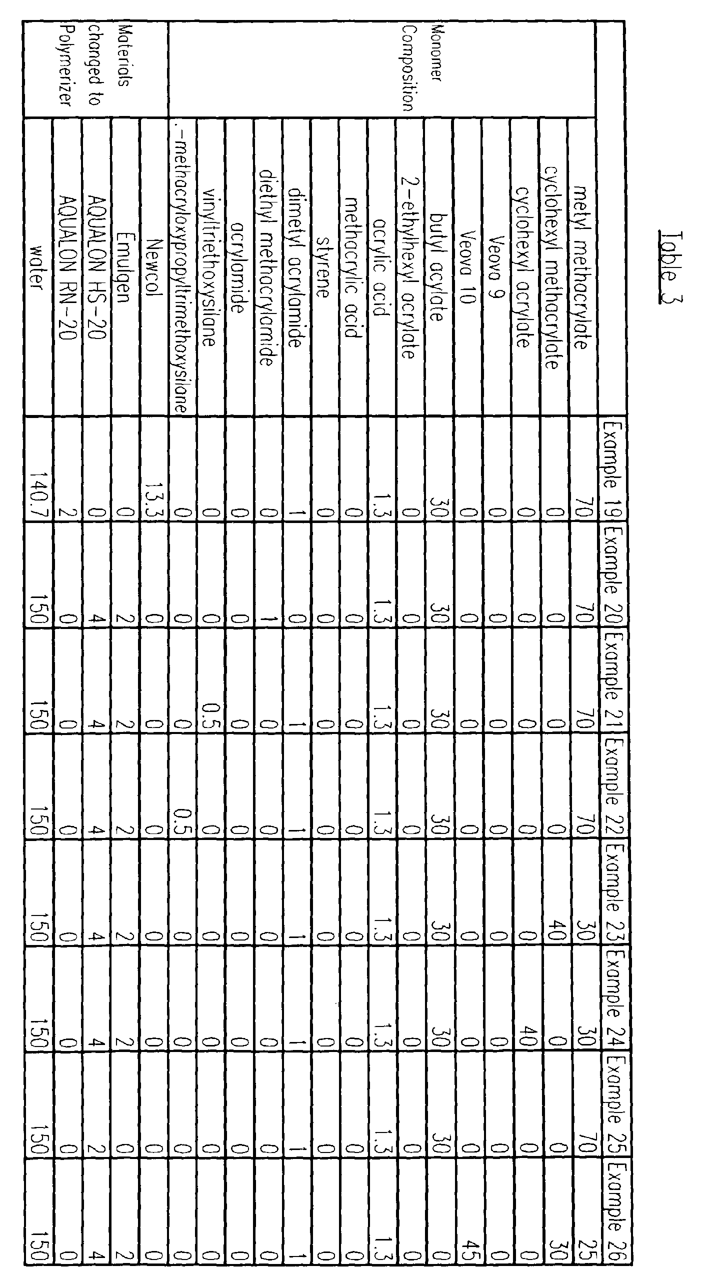

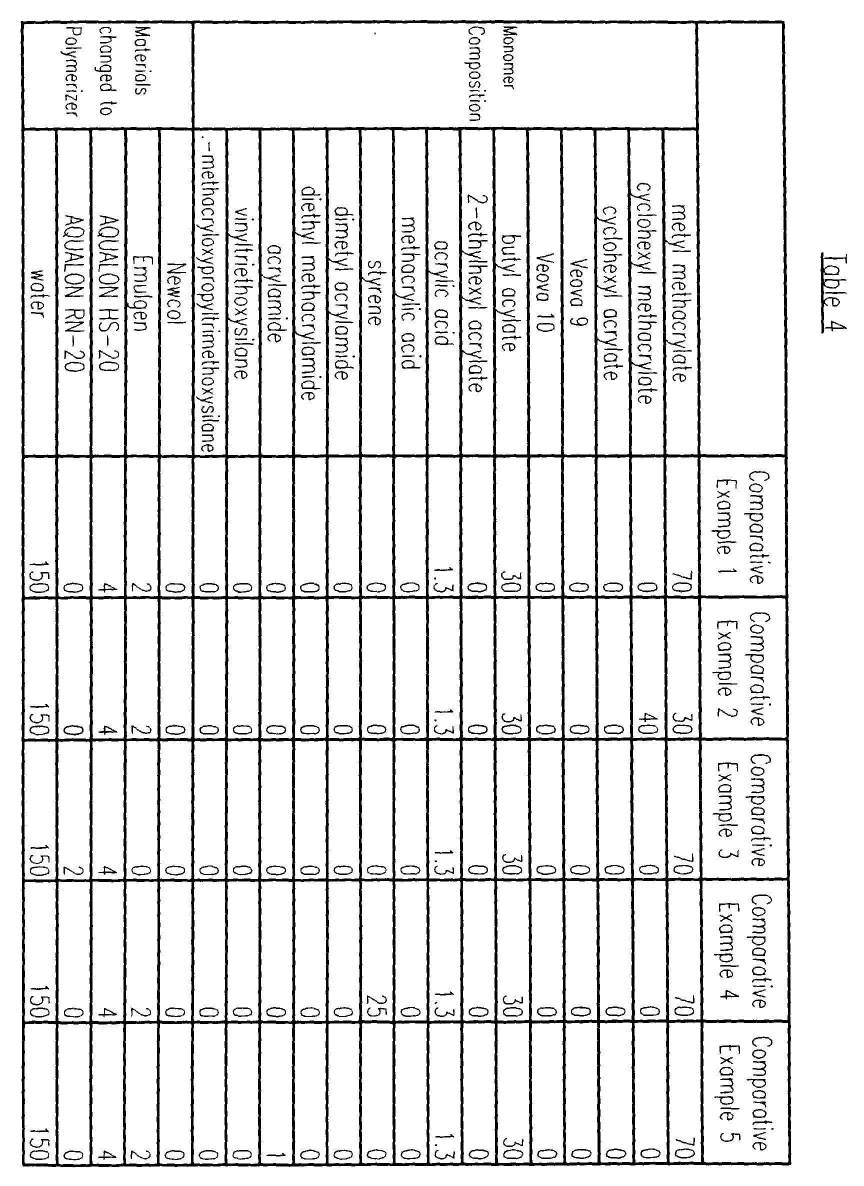

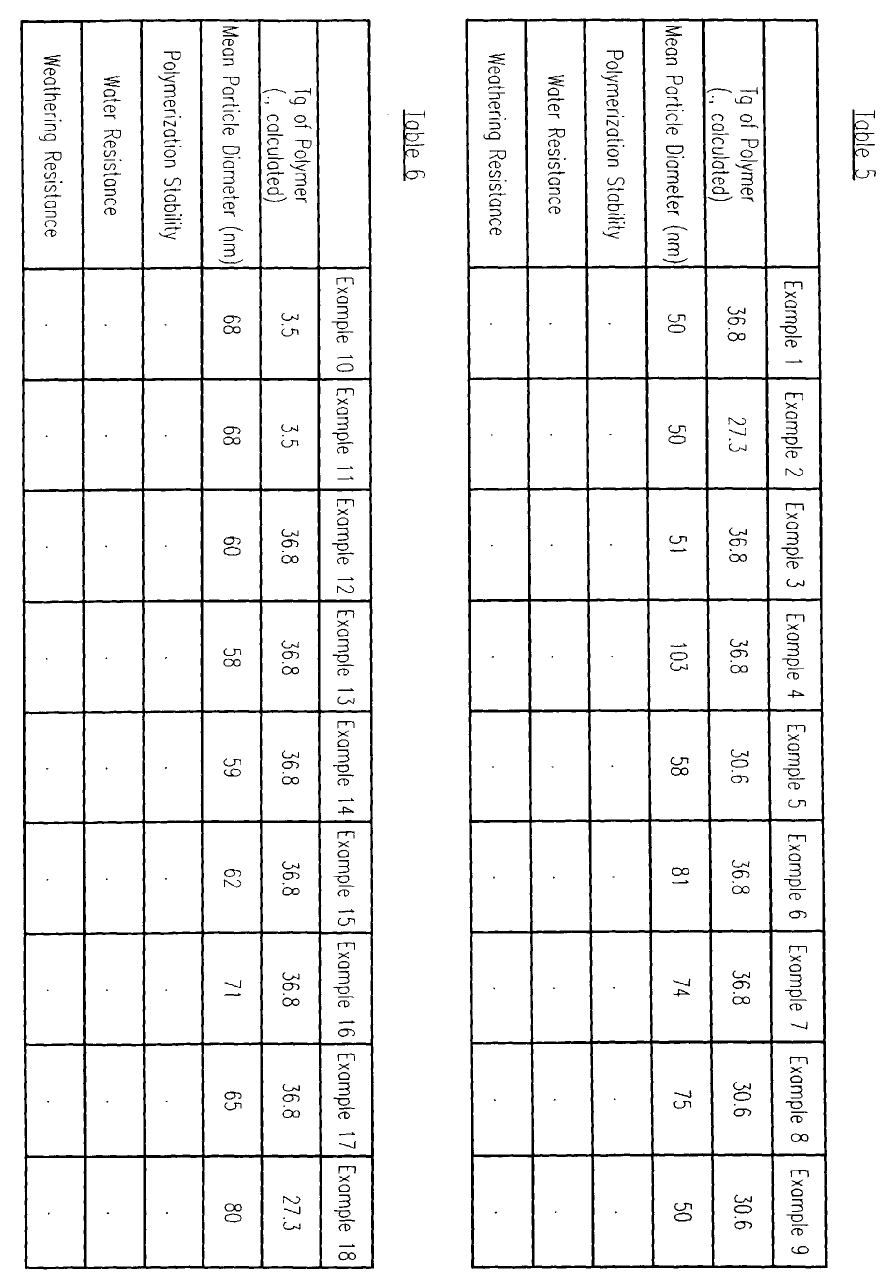

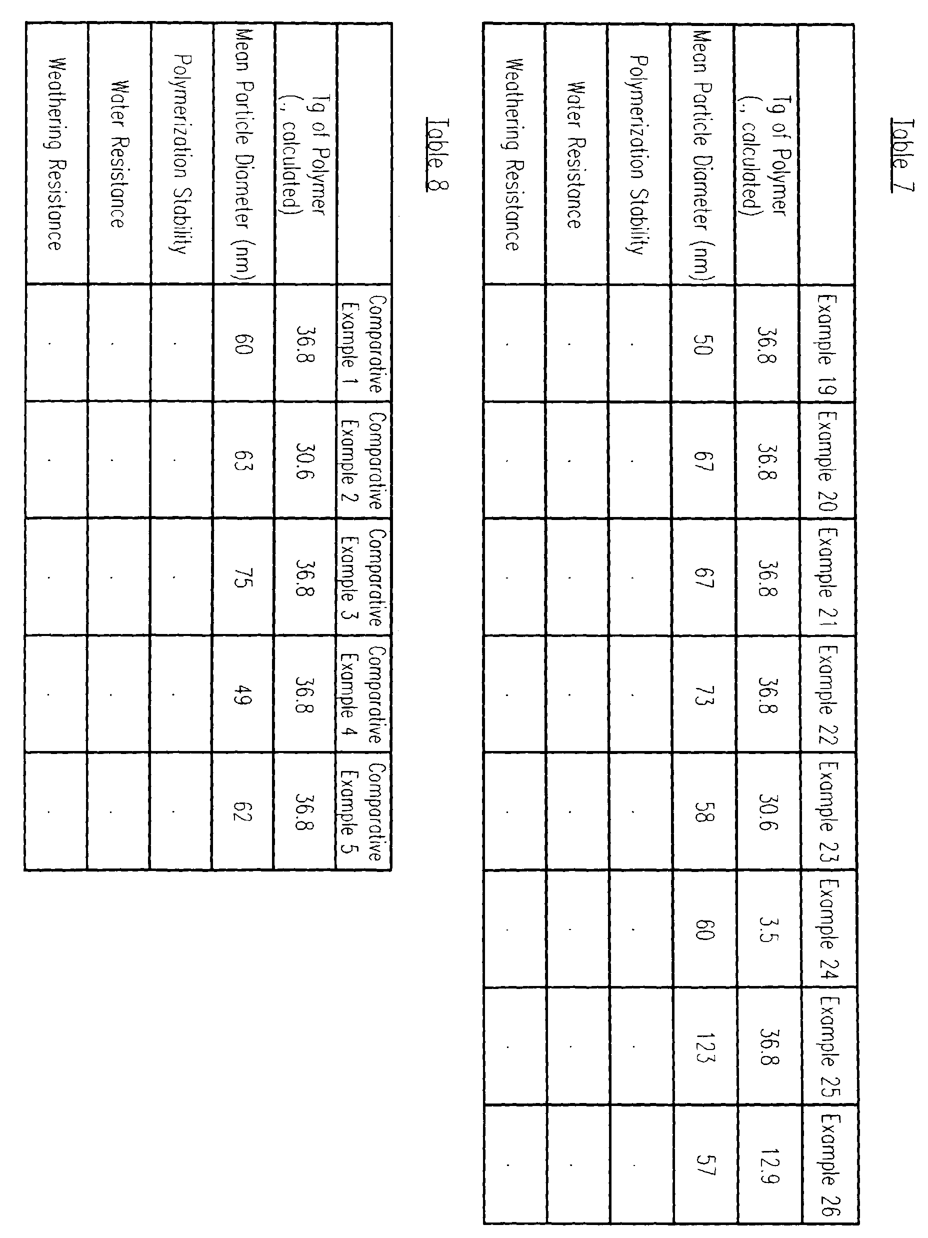

## Claims

1. A process for producing an emulsion, comprising:
preparing a monomer composition that comprises as essential components (a) a (meth)acrylic ester, (b) a dialkyl (meth)acrylamide or styrene wherein the amount of the styrene is from 0.1 to 20% by weight of the (meth)acrylic ester, and (c) a surfactant, and
subjecting the monomer composition to emulsion polymerization to form an emulsion.

2. The process for producing an emulsion according to claim 1, wherein the (meth)acrylic ester is selected from the group consisting of cyclohexyl (meth)acrylate and alkyl (meth)acrylates.

3. The process for producing an emulsion according to claim 1 or 2, wherein, when the monomer composition comprises the dialkyl (meth)acrylamide, the monomer composition further comprises a vinyl ester of a branched carboxylic acid.

4. The process for producing an emulsion according to any of claims 1 to 3, wherein the amount of the styrene is from 0.5 to 10% by weight of the (meth)acrylic ester.

5. The process for producing an emulsion according to any of claims 1 to 4, wherein the dialkyl (meth)acrylamide contains alkyl groups having 1 or 2 carbon atoms.

6. The process for producing an emulsion according to any of claims 1 to 5, wherein the surfactant is selected from the group consisting of nonionic surfactants and anionic surfactants.

7. The process for producing an emulsion according to any of claims 1 to 6, wherein the content of the surfactant in the emulsion is from 0.1 to 10% by weight.

8. The process for producing an emulsion according to any of claims 1 to 7, wherein the emulsion particles of the emulsion have a mean particle diameter of 200 nm or less.

9. The process for producing an emulsion according to any of claims 1 to 8, wherein the emulsion particles of the emulsion have a mean particle diameter of 100 nm or less.

10. An emulsion produced by a process according to any of claims 1 to 9.
